# EUROPEAN PATENT APPLICATION

(11) **EP 4 768 339 A1**
(43) Date of publication of application: **01.07.2026**
(21) Application number: 24906358.7
(22) Date of filing: 17.12.2024
(51) Int. Cl.: B60R 1/22, B60Q 9/00, B60Q 11/00, H05B 47/115

(54) **LIGHT CURTAIN CONTROL METHOD AND APPARATUS, VEHICLE AND STORAGE MEDIUM**

(30) Priority: 18.12.2023 CN 202311740750
(71) Applicant: Zhejiang Zeekr Intelligent Technology Co., Ltd., Ningbo, Zhejiang 315899 (CN); Zhejiang Geely Holding Group Co., Ltd., Hangzhou, Zhejiang 310051 (CN)
(72) Inventor: QIN, Yu, Ningbo, Zhejiang 315899 (CN); ZHANG, Zhibin, Ningbo, Zhejiang 315899 (CN); ZHANG, Xijie, Ningbo, Zhejiang 315899 (CN); CHEN, Chen, Ningbo, Zhejiang 315899 (CN)
(74) Representative: Elzaburu S.L.P.
(86) International application number: PCT/CN2024/140023
(87) International publication number: WO 2025/130879

(57) **Abstract**

A light curtain control method includes: acquiring an environmental image of a vehicle (S10); in response to that a human body image region exists in the environmental image, determining a first horizontal relative position of the human body image region in the environmental image (S20); determining a second horizontal relative position on a light curtain of the vehicle according to the first horizontal relative position (S30); and displaying a light curtain pattern based on the second horizontal relative position (S40). The light curtain control method enables the light curtain to reflect the real-time dynamics of people, effectively improving the interaction between people outside the vehicle and the vehicle. A light curtain control apparatus, a vehicle, and a computer-readable storage medium are also provided.

## Description

The present application claims priority to Chinese Patent Application No. 202311740750.8, filed on December 18, 2023, the entire contents of which are incorporated herein by reference.

### TECHNICAL FIELD

The present application relates to, but is not limited to, the technical field of vehicle light curtain control, and particularly to a light curtain control method, a light curtain control apparatus, a vehicle, and a storage medium.

### BACKGROUND

With the continuous development of automotive technology, car headlight design is gradually showing a trend towards greater personalization and intelligence. Some vehicles can even display text or patterns via light curtains when they detect someone in front of them. However, in such scenarios, the position of the content displayed on the light curtain is often fixed.

### SUMMARY

The following is an overview of the subject matter described in detail herein. This overview is not intended to limit the scope of the claims.

The main purpose of the present application is to provide a light curtain control method, a light curtain control apparatus, a vehicle, and a storage medium, which aims to solve the problem that the content displayed on the light curtain cannot reflect the real dynamics of people.

To achieve the above objectives, the present application provides a light curtain control method, which includes:
acquiring an environmental image of a vehicle;
in response to that a human body image region exists in the environmental image, determining a first horizontal relative position of the human body image region in the environmental image;
determining a second horizontal relative position on a light curtain of the vehicle according to the first horizontal relative position; and
displaying a light curtain pattern based on the second horizontal relative position.

In an embodiment, after the acquiring the environmental image of the vehicle and before the determining the first horizontal relative position of the human body image region in the environmental image, the method further includes:
converting the environmental image in a color-encoded YUV format into the environmental image in a graphics processing unit (GPU) texture format; and
inputting the environmental image in the GPU texture format into a pre-trained human body recognition model, to obtain a human body recognition result output by the human body recognition model, where the human body recognition result includes human body image region position data; and
the determining the first horizontal relative position of the human body image region in the environmental image includes:
   calculating the first horizontal relative position according to the human body image region position data and a pixel width of the environmental image in the GPU texture format.

In an embodiment, the human body image region position data includes a center pixel horizontal coordinate of the human body image region, and the calculating the first horizontal relative position according to the human body image region position data and the pixel width of the environmental image in the GPU texture format includes:
dividing the center pixel horizontal coordinate of the human body image region by the pixel width of the environmental image in the GPU texture format to obtain the first horizontal relative position.

In an embodiment, the displaying the light curtain pattern based on the second horizontal relative position includes:
acquiring the light curtain pattern, where a pixel width of the light curtain pattern is less than a pixel width of the light curtain, and a pixel height of the light curtain pattern is equal to a pixel height of the light curtain;
performing pixel supplementation outside the light curtain pattern based on the second horizontal relative position to obtain a target pattern, where the light curtain pattern is located at the second horizontal relative position in the target pattern, and a pixel width and a pixel height of the target pattern are respectively consistent with the pixel width and the pixel height of the light curtain; and
controlling the light curtain to display the target pattern.

In an embodiment, the human body recognition result further includes human body posture data, and the acquiring the light curtain pattern includes:
acquiring a corresponding light curtain pattern reflecting a human body posture according to the human body posture data.

In an embodiment, the acquiring the light curtain pattern includes:
acquiring a corresponding light curtain pattern reflecting a human body movement state according to the human body movement state, where the human body movement state is pre-determined based on the first horizontal relative position.

In an embodiment, the human body recognition result further includes human body posture data, and the acquiring the light curtain pattern includes:
acquiring a corresponding light curtain pattern reflecting both a human body posture and a human body movement state according to the human body posture data and the human body movement state, where the human body movement state is pre-determined based on the first horizontal relative position.

In an embodiment, the number of the environmental images in the GPU texture format is at least two frames, each frame of the environmental image in the GPU texture format corresponds to one first horizontal relative position, pixel horizontal coordinates of the environmental image in the GPU texture format increase from a first side to a second side, and a process of determining the human body movement state includes:
storing at least two first horizontal relative positions into a preset-length queue;
performing a weighted average calculation on the at least two first horizontal relative positions in the queue to obtain a weighted average value, where weights corresponding to the at least two first horizontal relative positions in the queue are sequentially set according to a time order of being stored into the queue, and a weight of a latest stored first horizontal relative position in the queue is highest;
in response to that an absolute difference between the latest stored first horizontal relative position in the queue and the weighted average value is less than a preset threshold, determining that the human body movement state is stationary;
in response to that the absolute difference between the latest stored first horizontal relative position in the queue and the weighted average value is greater than or equal to the preset threshold, and the latest stored first horizontal relative position in the queue is greater than the weighted average value, determining that the human body movement state is moving toward the second side; or
in response to that the absolute difference between the latest stored first horizontal relative position in the queue and the weighted average value is greater than or equal to the preset threshold, and the latest stored first horizontal relative position in the queue is less than the weighted average value, determining that the human body movement state is moving toward the first side.

The present application also proposes a light curtain control apparatus, which includes:
an acquisition module, configured to acquire an environmental image of a vehicle;
a first determination module, configured to, in response to that a human body image region exists in the environmental image, determine a first horizontal relative position of the human body image region in the environmental image;
a second determination module, configured to determine a second horizontal relative position on a light curtain of the vehicle according to the first horizontal relative position; and
a display module, configured to display a light curtain pattern based on the second horizontal relative position.

The present application also proposes a vehicle, which includes a memory, a processor, and a light curtain control program stored in the memory and executable on the processor. When the lighting control program is executed by the processor, it implements the steps of the light curtain control method described above.

The present application also proposes a computer-readable storage medium. A light curtain control program is stored on the computer-readable storage medium, and the light curtain control program, when executed by a processor, implements the steps of the light curtain control method described above.

The light curtain control method, the light curtain control apparatus, the vehicle, and the storage medium proposed in the present application acquire an environmental image of the vehicle; if a human body image region exists in the environmental image, determine a first horizontal relative position of the human body image region in the environmental image; determine a second horizontal relative position on the vehicle's light curtain based on the first horizontal relative position; and display a light curtain pattern based on the second horizontal relative position. Based on the present application's solution, firstly, an environmental image of the vehicle is acquired, and the first horizontal relative position of the human body image region in the environmental image is determined. Subsequently, a second horizontal relative position is determined on the vehicle's light curtain based on the first horizontal relative position, thereby achieving dynamic tracking of the person's location. Displaying a light curtain pattern on the light curtain based on the second horizontal relative position allows the light curtain to reflect the real-time dynamics of the person, effectively improving the interactivity between people outside the vehicle and the vehicle.

After reading and understanding the accompanying diagrams and detailed descriptions, the other aspects can be understood.

### BRIEF DESCRIPTION OF THE DRAWINGS

FIG. 1 is a functional modules schematic diagram of a vehicle including a light curtain control apparatus of the present application.
FIG. 2 is a schematic flowchart of a light curtain control method according to a first exemplary embodiment of the present application.
FIG. 3 is a schematic diagram of the light curtain display effect involved in a light curtain control method of the present application.
FIG. 4 is a schematic flowchart of a light curtain control method according to a second exemplary embodiment of the present application.
FIG. 5 is a schematic flowchart of a light curtain control method according to a third exemplary embodiment of the present application.
FIG. 6 is a schematic flowchart of a light curtain control method according to a fourth exemplary embodiment of the present application.
FIG. 7 is a schematic diagram of a pattern involved in a light curtain control method of the present application.
FIG. 8 is a schematic flowchart of a light curtain control method according to a fifth exemplary embodiment of the present application.
FIG. 9 is a schematic flowchart of a light curtain control method according to a sixth exemplary embodiment of the present application.
FIG. 10 is a schematic flowchart of a light curtain control method according to a seventh exemplary embodiment of the present application.
FIG. 11 is a schematic flowchart of a light curtain control method according to an eighth exemplary embodiment of the present application.

The realization of the purpose, functional features and advantages of the present application will be further explained in conjunction with the embodiments and with reference to the accompanying drawings.

### DETAILED DESCRIPTION OF THE EMBODIMENTS

It should be understood that the specific embodiments described herein are merely illustrative of the present application and are not intended to limit the present application.

The main solution of the embodiment in the present application is: acquiring an environmental image of the vehicle; determining a first horizontal relative position of the human body image region in the environmental image when a human body image region exists in the environmental image; determining a second horizontal relative position on the vehicle's light curtain based on the first horizontal relative position; and displaying a light curtain pattern based on the second horizontal relative position. Based on the present application solution, firstly, an environmental image of the vehicle is acquired, and the first horizontal relative position of the human body image region in the environmental image is determined. Subsequently, the second horizontal relative position is determined on the vehicle's light curtain based on the first horizontal relative position, thereby achieving dynamic tracking of the person's location. Displaying a light curtain pattern on the light curtain based on the second horizontal relative position allows the light curtain to reflect the person's real-time dynamics, effectively improving the interactivity between people outside the vehicle and the vehicle.

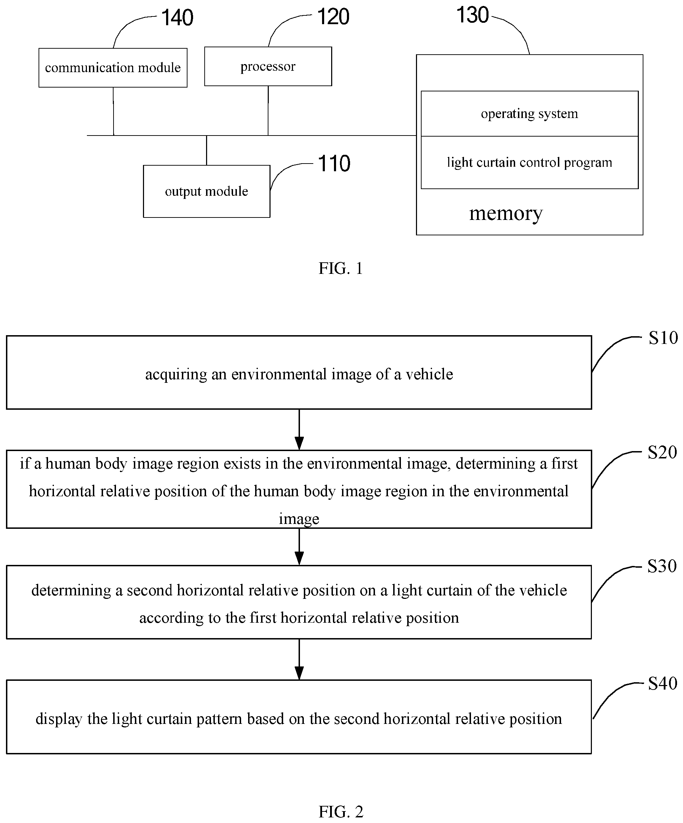

Specifically, referring to FIG. 1, which is a functional modules schematic diagram of a vehicle including a light curtain control apparatus of the present application. The light curtain control apparatus can be an apparatus that is independent of the vehicle and capable of controlling the light curtain. It can be carried on the vehicle in the form of hardware or software.

In this embodiment, the vehicle including the light curtain control apparatus includes at least an output module 110, a processor 120, a memory 130, and a communication module 140.

The memory 130 stores the operating system and the light curtain control program. The light curtain control apparatus can store information such as the vehicle's environmental image, the first horizontal relative position of the human body image region in the environmental image, the second horizontal relative position on the light curtain, and the light curtain pattern in the memory 130. The output module 110 can be a display screen, etc. The communication module 140 can include a Wi-Fi module, a mobile communication module, and a Bluetooth module, etc., and the vehicle communicates with external devices or servers through the communication module 140.

When the light curtain control program in memory 130 is executed by the processor, it performs the following steps:
An environmental image of the vehicle is acquired.

In the case where a human body image region exists in the environmental image, the first horizontal relative position of the human body image region in the environmental image is determined.

Based on the first horizontal relative position, a second horizontal relative position is determined on the vehicle's light curtain.

The light curtain pattern is displayed based on the second horizontal relative position.

Furthermore, when the light curtain control program in memory 130 is executed by the processor, it also performs the following steps:
The environmental image in a color-encoded YUV format is converted into the environmental image in a graphics processing unit (GPU) texture format.

The environment image in GPU texture format is input into a pre-trained human body recognition model to obtain the human body recognition result output by the human body recognition model. The human body recognition result includes human body image region position data.

Furthermore, when the light curtain control program in memory 130 is executed by the processor, it also performs the following steps:
The first horizontal relative position is calculated based on the human body image region position data and the pixel width of the environment image in GPU texture format.

Furthermore, when the light curtain control program in memory 130 is executed by the processor, it also performs the following steps:
The first horizontal relative position is obtained by dividing the center pixel horizontal coordinate of the human body image region by the pixel width of the environment image in the GPU texture format.

Furthermore, when the light curtain control program in memory 130 is executed by the processor, it also performs the following steps:
The light curtain pattern is acquired. The pixel width of the light curtain pattern is smaller than the pixel width of the light curtain, and the pixel height of the light curtain pattern is equal to the pixel height of the light curtain.

Based on the second horizontal relative position, pixel supplementation outside the light curtain pattern is performed to obtain a target pattern, wherein the second horizontal relative position of the light curtain pattern in the target pattern, and the pixel width and pixel height of the target pattern are the same as the pixel width and pixel height of the light curtain, respectively.

The light curtain is controlled to display the target pattern.

Furthermore, when the light curtain control program in memory 130 is executed by the processor, it also performs the following steps:
Based on the human body posture data, the corresponding light curtain pattern reflecting the human posture is obtained.

Furthermore, when the light curtain control program in memory 130 is executed by the processor, it also performs the following steps:
Based on the human body movement state, a corresponding light curtain pattern reflecting the human body movement state is obtained. The human body movement state is predetermined based on the first horizontal relative position.

Furthermore, when the light curtain control program in memory 130 is executed by the processor, it also performs the following steps:
Based on the human body posture data and human body movement state, a corresponding light curtain pattern reflecting the human posture and human body movement state is obtained. The human body movement state is predetermined based on the first horizontal relative position.

Furthermore, when the light curtain control program in memory 130 is executed by the processor, it also performs the following steps:
At least two first horizontal relative positions are stored into a preset-length queue.

A weighted average calculation is performed on the at least two first horizontal relative positions in the queue to obtain a weighted average value. Weights corresponding to the at least two first horizontal relative positions in the queue are sequentially set according to a time order of being stored into the queue, and a weight of a latest stored first horizontal relative position in the queue is highest.

If an absolute difference between the latest stored first horizontal relative position in the queue and the weighted average value is less than a preset threshold, the human body movement state is determined as stationary.

If the absolute difference between the latest stored first horizontal relative position in the queue and the weighted average value is greater than or equal to the preset threshold, and the latest stored first horizontal relative position in the queue is greater than the weighted average value, the human body movement state is determined as moving toward the second side.

If the absolute difference between the latest stored first horizontal relative position in the queue and the weighted average value is greater than or equal to the preset threshold, and the latest stored first horizontal relative position in the queue is less than the weighted average value, the human body movement state is determined as moving toward the first side.

In this embodiment, an environmental image of the vehicle is first acquired, and the first horizontal relative position of the human body image region in the environmental image is determined. Subsequently, a second horizontal relative position is determined on the vehicle's light curtain based on the first horizontal relative position, thereby achieving dynamic tracking of the person's location. A light curtain pattern is displayed based on the second horizontal relative position, enabling the light curtain to reflect the person's real-time movements and effectively improving the interactivity between people outside the vehicle and the vehicle.

Referring to FIG. 2, a flowchart is provided in the first embodiment of the light curtain control method of this application, and the light curtain control method includes:
Step S 10: acquiring an environmental image of a vehicle.

Specifically, with the continuous development of automotive technology, headlight design is gradually showing a trend towards greater personalization and intelligence. Some vehicles can even display text or patterns through light curtains when they detect someone in front of them. However, in this scenario, the position of the content displayed on the light curtain is often fixed and cannot reflect the actual movement of the person.

This embodiment proposes an image-based light curtain control method, enabling the light curtain display content to reflect real human movements. More specifically, the vehicle involved in this embodiment is equipped with a light curtain, and multiple LED beads on the light curtain can be controlled independently. By adjusting the color, brightness, and flashing mode of the LED beads, the light curtain can present different lighting expressions to convey information, highlight the vehicle's personality, or increase visual appeal.

First, it's necessary to acquire images of the vehicle's surroundings using a vehicle camera. The vehicle cameras are among the most common hardware devices, typically installed at the front, rear, sides, or other locations of the vehicle. They capture images of the environment around the vehicle, providing visual information such as front views, rear views, and panoramic views.

Step S20: if a human body image region exists in the environmental image, determining a first horizontal relative position of the human body image region in the environmental image.

Specifically, after acquiring the environmental image, computer vision algorithms can be used to process the environmental image to detect the presence of human body image regions. A human body image region refers to a specific region occupied by a human body detected in the environmental image. The human body image regions can be detected and identified using image processing algorithms, typically represented as a specific part, outline or a bounding box containing a human body within the image.

When a human body image region exists within an environmental image, its first horizontal relative position within the environmental image can be further determined. More specifically, the pixel coordinates of the human body image region and the pixel width of the environmental image can be obtained. Then, based on the pixel coordinates of the human body image region and the pixel width of the environmental image, the first horizontal relative position of the human body image region in the environmental image can be calculated. This first horizontal relative position refers to the relative position of the human body image region in the horizontal direction of the entire environmental image, and can be expressed as a percentage or decimal. For example, a first horizontal relative position of 0.65 in the environmental image indicates that a point within the human body image region is located at 65% of the horizontal direction of the entire environmental image. This representation typically standardizes the width of the environmental image to a range of 0 to 1, facilitating uniform processing across environmental images of different resolutions. If the pixel coordinates of the environmental image increase from the first side (e.g., left) to the second side (e.g., right), then a first horizontal relative position of 0 indicates that a point within the human body image region is at the edge of the first side of the environmental image (e.g., the leftmost edge), and a position of 1 indicates that a point within the human body image region is at the edge of the second side of the environmental image (e.g., the rightmost edge).

Step S30: determining a second horizontal relative position on a light curtain of the vehicle according to the first horizontal relative position.

Specifically, the second horizontal relative position refers to the position where the light curtain pattern reflecting human movement should be displayed, which is also the relative position of the light curtain pattern in the entire horizontal direction of the light curtain. To determine the second horizontal relative position on the vehicle's light curtain, the installation location of the vehicle camera must first be considered, specifically in the following two cases.

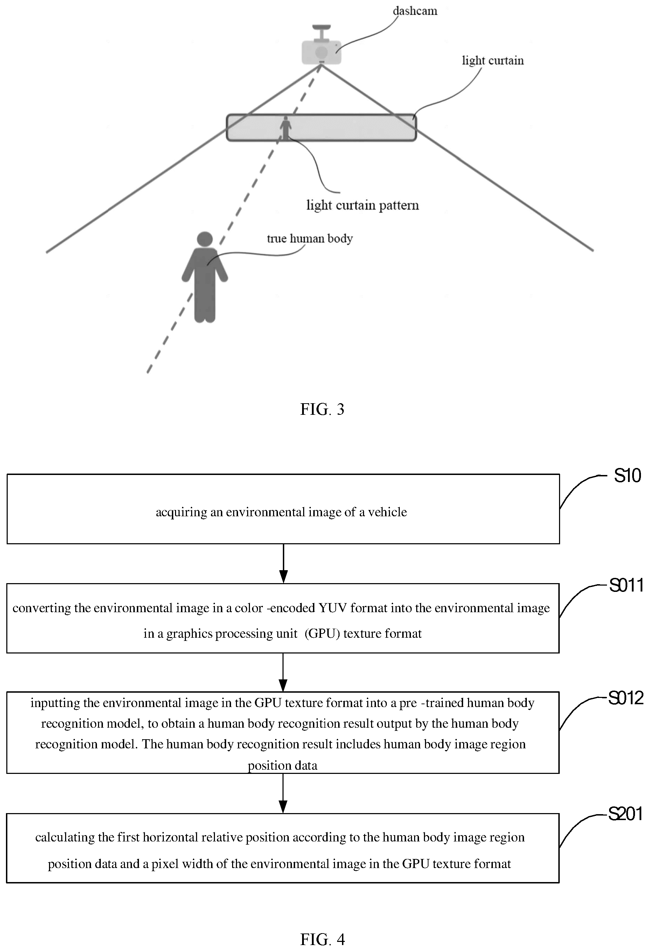

Scenario 1: The visual center of the vehicle camera and the center of the light curtain are both located on the vehicle's central axis. The field of view of the vehicle camera can be scaled proportionally to the pixel width of the light curtain, while the relative positions of people or objects in the field of view remain unchanged. In this case, the first horizontal relative position can be directly used as the second horizontal relative position. For example, FIG. 3 is a schematic diagram of the light curtain display effect involved in a light curtain control method of the present application. The vehicle camera acquiring the environmental image is the dashcam shown in FIG. 3. The visual center of the dashcam and the center of the light curtain are both located on the vehicle's central axis. That is, based on the environmental image acquired by the dashcam, the first horizontal relative position can be calculated and used as the second horizontal relative position.

Scenario 2: The visual center of the vehicle camera is not located on the vehicle's central axis. This means the camera may be mounted on the left or right side of the vehicle. In this case, the vehicle camera's field of view cannot be directly scaled proportionally to the pixel width of the light curtain, and the relative positions of people or objects within the field of view will change. Therefore, it is necessary to convert the first horizontal relative position into a second horizontal relative position based on pre-calibrated parameters.

In this embodiment, the vehicle camera installation position described in Scenario 1 above can be selected, and the first horizontal relative position and the second horizontal relative position do not need to be converted.

Step S40: display the light curtain pattern based on the second horizontal relative position.

Specifically, after determining the second horizontal relative position, the light curtain pattern can be further acquired and displayed at the second horizontal relative position. The light curtain pattern not only reflects the position of the human body but also its posture and/or movement state (direction).

In an implementation, the vehicle camera is located at the rear of the vehicle, shooting towards the rear, while the light curtain is located at the front. When someone moves near the rear of the vehicle, their position is reflected in real-time on the light curtain at the front of the vehicle. Thus, the movement of people at the rear of the vehicle can be determined by observing the content displayed on the light curtain at the front of the vehicle.

In this embodiment, an environmental image of the vehicle is first acquired, and the first horizontal relative position of the human body image region in the environmental image is determined. Subsequently, a second horizontal relative position is determined on the vehicle's light curtain based on the first horizontal relative position, thereby achieving dynamic tracking of the person's location. A light curtain pattern is displayed based on the second horizontal relative position, enabling the light curtain to reflect the person's real-time movements and effectively improving the interactivity between people outside the vehicle and the vehicle.

Further, referring to FIG. 4, the second embodiment of the light curtain control method of the present application provides a flowchart. Based on the embodiment shown in FIG. 2 above, after acquiring the environmental image of the vehicle in step S10, and before "determining the first horizontal relative position of the human body image region in the environmental image" in step S20, the method further includes:
Step S011: converting the environmental image in a color-encoded YUV format into the environmental image in a graphics processing unit (GPU) texture format;
Step S012: inputting the environmental image in the GPU texture format into a pre-trained human body recognition model, to obtain a human body recognition result output by the human body recognition model. The human body recognition result includes human body image region position data.

The step S20, "determining the first horizontal relative position of the human body image region in the environmental image", is further refined to include:
Step S201: calculating the first horizontal relative position according to the human body image region position data and a pixel width of the environmental image in the GPU texture format.

Specifically, the environmental images recorded in real time by the vehicle camera are the environmental images in YUV format. YUV format is an image color encoding format that divides the image into two components: luminance (Y) and chrominance (UV) to effectively compress color information, thereby reducing the size of the image data. It is widely used in image compression and transmission.

The environmental images in YUV format cannot be directly used for human recognition. They need to be converted into the environmental images in GPU texture format. This conversion process can be implemented based on a preset algorithm framework, such as the Camera2 framework in the Android system. GPU texture is a data structure used in graphics programming to store and process image data.

By inputting an environment image in GPU texture format into a pre-trained human body recognition model, the model outputs human body recognition results, which include human body image region position data. In an embodiment, the human body recognition results may also include human body posture data. The reason the human body recognition model can output human body image region position data and human body posture data is that it learns the correspondence between input data and expected output during training. For example, when performing human body posture recognition, the human body recognition model learns how to identify the skeletal key points of the human body from an image, and understands and determines the corresponding human body posture.

Human body image region position data can include the pixel coordinates of a point within the human body image region. This point can be the center point or a non-center point of the human body image region, and its coordinates are used to characterize the position of the human body image region. Dividing the pixel horizontal coordinate of this point by the pixel width of the environment image in GPU texture format yields the first horizontal relative position.

In this embodiment, by converting the environmental images in YUV format into a environment image in GPU texture format and combining it with a pre-trained human body recognition model, the image can be processed and analyzed more effectively, thereby obtaining the human body recognition result output by the human body recognition model. The human body recognition result includes human body image region position data. Based on the human body image region position data and the pixel width of the environment image in GPU texture format, a first horizontal relative position can be calculated. This makes the calculated first horizontal relative position more accurate.

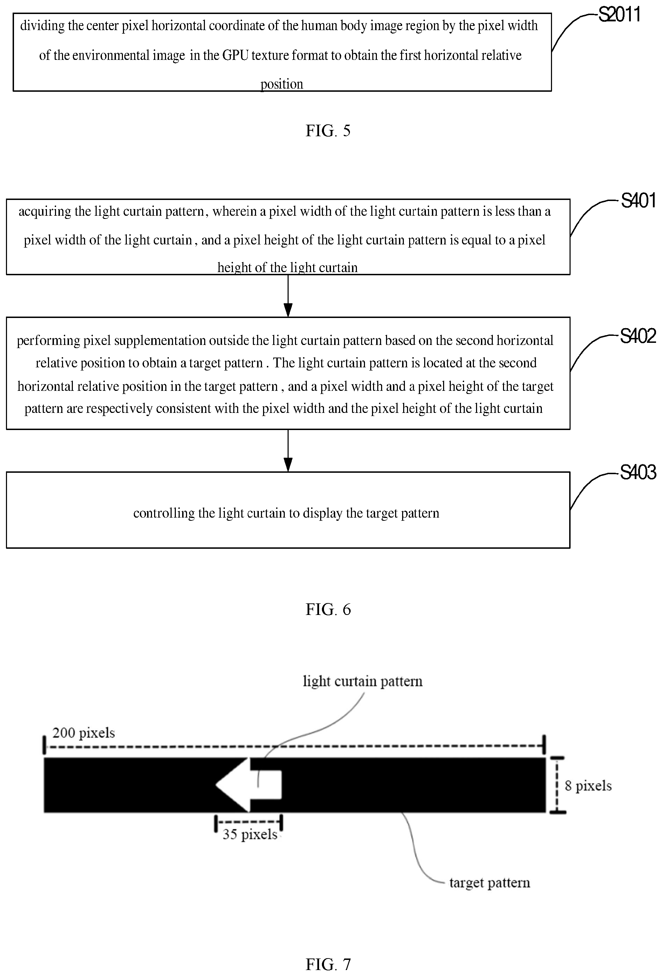

Further, referring to FIG. 5, the third embodiment of the light curtain control method of the present application provides a flowchart. Based on the embodiment shown in FIG. 4 above, the human body image region position data includes the center pixel horizontal coordinate of the human body image region. The step S201, "calculating the first horizontal relative position according to the human body image region position data and the pixel width of the environment image in the GPU texture format", is further refined to include:

Step S2011: dividing the center pixel horizontal coordinate of the human body image region by the pixel width of the environmental image in the GPU texture format to obtain the first horizontal relative position.

Specifically, in this embodiment, the center point of the human body image region can be selected to represent the position of the human body image region. The human body image region position data includes the center pixel horizontal coordinate of the human body image region. The first horizontal relative position can be obtained by dividing the center pixel horizontal coordinate of the human body image region by the pixel width of the environment image in GPU texture format.

For example, if the center pixel horizontal coordinate of the human body image region is 1248, and the pixel width of the environment image (1080P resolution) in GPU texture format is 1920, then the first horizontal relative position is 1248/1920=0.65.

In this embodiment, the center point of the human body image region is used to represent the position of the human body image region. The first horizontal relative position is calculated using the center pixel horizontal coordinate of the human body image region and the pixel width of the environment image in GPU texture format. This makes the first horizontal relative position more accurately reflect the person's true position.

Further, referring to FIG. 6, the fourth embodiment of the light curtain control method of the present application provides a flowchart. Based on the embodiments shown in FIG. 4 above, the step S40 of "displaying the light curtain pattern based on the second horizontal relative position" is further refined, including:
Step S401: acquiring the light curtain pattern, wherein a pixel width of the light curtain pattern is less than a pixel width of the light curtain, and a pixel height of the light curtain pattern is equal to a pixel height of the light curtain.

Step S402: performing pixel supplementation outside the light curtain pattern based on the second horizontal relative position to obtain a target pattern. The light curtain pattern is located at the second horizontal relative position in the target pattern, and a pixel width and a pixel height of the target pattern are respectively consistent with the pixel width and the pixel height of the light curtain.

Step S403: controlling the light curtain to display the target pattern.

Specifically, after determining the second horizontal relative position, the light curtain pattern needs to be obtained. The pixel height of the light curtain pattern is equal to the pixel height of the light curtain, and the pixel width of the light curtain pattern is less than the pixel width of the light curtain. In other words, the light curtain pattern only occupies a part of the light curtain, and the part outside the light curtain pattern is the blank area that needs to be filled.

Furthermore, based on the second horizontal relative position, the pixel horizontal coordinates of the light curtain pattern in the light curtain are determined, and the blank parts outside the light curtain pattern are filled with pixels (for example, "0" is filled, where "0" indicates that the corresponding LED is not lit), and finally the target pattern that completely occupies all pixels of the light curtain is obtained.

Taking FIG. 7 as an example, FIG. 7 is a schematic diagram of a pattern involved in a light curtain control method of the present application. The arrow pattern with a size of 35*8 is the light curtain pattern. By filling the part outside the light curtain pattern with "0", a target pattern with a size of 200*8 can be obtained.

In this embodiment, the light curtain pattern only occupies a portion of the light curtain. This means that compared to a full-size pattern, the light curtain pattern in this embodiment has the advantages of smaller storage size and higher transmission efficiency. When the light curtain pattern needs to be displayed, it is only necessary to fill pixels based on the existing pattern to obtain the full-size target pattern, and then control the light curtain to display the target pattern. Furthermore, the pattern display effect achieved in this embodiment is consistent with the full-size pattern display effect.

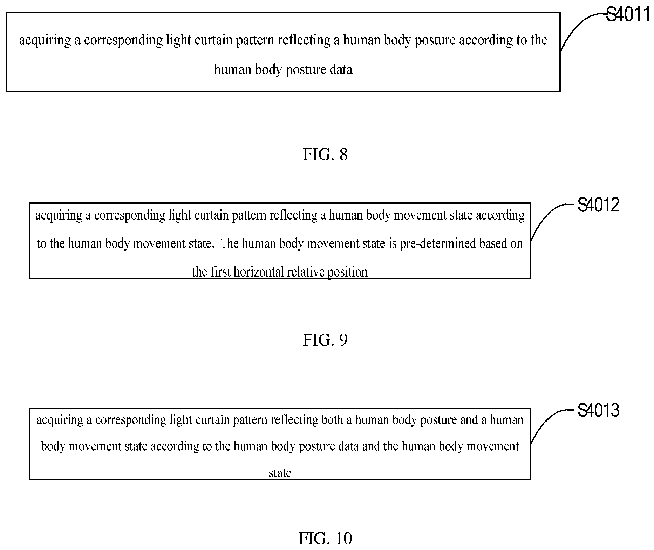

Further, referring to FIG. 8, the fifth embodiment of the light curtain control method of the present application provides a flowchart. Based on the embodiment shown in FIG. 6 above, the human body recognition result further includes human body posture data, further refining the "acquiring the light curtain pattern" in step S401, including:
Step S4011: acquiring a corresponding light curtain pattern reflecting a human body posture according to the human body posture data.

Specifically, the human body recognition result in this embodiment also includes human body posture data, which reflects specific human body postures. Based on the human body posture data, a corresponding light curtain pattern reflecting the human body posture can be obtained. The light curtain pattern reflecting the human body posture contains corresponding human body posture content, such as walking, standing still, waving, spread-eagle posture, bending over, etc.

In this embodiment, the corresponding light curtain pattern reflecting the human posture is obtained based on human body posture data, which can display the content of the human posture and effectively enhance the display effect of the light curtain pattern.

Further, referring to FIG. 9, the sixth embodiment of the light curtain control method of the present application provides a flowchart. Based on the embodiment shown in FIG. 6 above, the step S401 of "acquiring the light curtain pattern" is further refined, including:
Step S4012: acquiring a corresponding light curtain pattern reflecting a human body movement state according to the human body movement state. The human body movement state is pre-determined based on the first horizontal relative position.

Specifically, since the first horizontal relative position can reflect a person's position, when there are enough first horizontal relative positions, the human body movement state can be determined based on the analysis of the first horizontal relative positions. The human body movement state can be divided into three types: moving to the first side (e.g., the left side), standing still, and moving to the second side (e.g., the right side).

After determining the human body movement state, a corresponding light curtain pattern reflecting the human body movement state can be obtained. The light curtain pattern reflecting the human body movement state contains the corresponding human body movement state content.

In this embodiment, the corresponding light curtain pattern reflecting the human body movement state is obtained based on the human body movement state, which can display the content of the human body movement state and effectively enhance the display effect of the light curtain pattern.

Further, referring to FIG. 10, the seventh embodiment of the light curtain control method of the present application provides a flowchart. Based on the embodiment shown in FIG. 6 above, the human body recognition result further includes human body posture data, and the "acquiring the light curtain pattern" in step S401 is further refined, including:
Step S4013: acquiring a corresponding light curtain pattern reflecting both a human body posture and a human body movement state according to the human body posture data and the human body movement state.

Specifically, the human body recognition result in this embodiment also includes human body posture data, which reflects a specific human posture. Based on the human body posture data and the human body movement state, a corresponding light curtain pattern reflecting the human body posture and movement state can be obtained. The light curtain pattern reflecting the human body posture and movement state includes corresponding human body posture content and human body movement state content, such as walking to the left, walking to the right, etc.

In this embodiment, a corresponding light curtain pattern reflecting the human body posture and movement state is obtained based on human body posture data and human body movement state, which can display the content of human body posture and human body movement state and effectively enhance the display effect of the light curtain pattern.

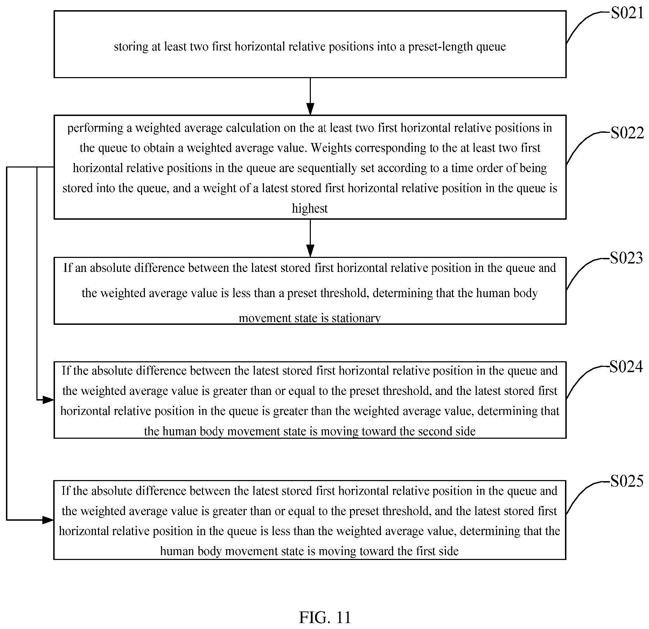

Further, referring to FIG. 11, the eighth embodiment of the light curtain control method of the present application provides a flowchart. Based on the embodiment shown in FIG. 9 or FIG. 10 above, the number of the environmental image in GPU texture format is at least two frames, each frame of the environmental image in GPU texture format corresponds to a first horizontal relative position, the pixel horizontal coordinate of the environmental image in GPU texture format increases from the first side to the second side, and the process of determining the human body movement state includes:
Step S021: storing at least two first horizontal relative positions into a preset-length queue.

Step S022: performing a weighted average calculation on the at least two first horizontal relative positions in the queue to obtain a weighted average value. Weights corresponding to the at least two first horizontal relative positions in the queue are sequentially set according to a time order of being stored into the queue, and a weight of a latest stored first horizontal relative position in the queue is highest.

Step S023: If an absolute difference between the latest stored first horizontal relative position in the queue and the weighted average value is less than a preset threshold, determining that the human body movement state is stationary.

Step S024: If the absolute difference between the latest stored first horizontal relative position in the queue and the weighted average value is greater than or equal to the preset threshold, and the latest stored first horizontal relative position in the queue is greater than the weighted average value, determining that the human body movement state is moving toward the second side.

Step S025: If the absolute difference between the latest stored first horizontal relative position in the queue and the weighted average value is greater than or equal to the preset threshold, and the latest stored first horizontal relative position in the queue is less than the weighted average value, determining that the human body movement state is moving toward the first side.

Specifically, to enhance the display effect of the light curtain pattern, this embodiment introduces human body movement state as the basis for acquiring the light curtain pattern. First, at least two first horizontal relative positions are stored in a queue of preset length. Based on the order in which they are stored in the queue, weights are assigned to the at least two first horizontal relative positions in the queue, with the last first horizontal relative position stored having the highest weight and the earliest first horizontal relative position stored having the lowest weight. Then, a weighted average is calculated for the at least two first horizontal relative positions in the queue to obtain the weighted average value.

If the absolute difference between the latest first horizontal relative position in the queue and the weighted average value is less than a preset threshold, the human body movement state is determined to be stationary; if the absolute difference between the latest first horizontal relative position in the queue and the weighted average value is greater than or equal to a preset threshold, and the latest first horizontal relative position in the queue is greater than the weighted average value, the human body movement state is determined to be moving to the second side; if the absolute difference between the latest first horizontal relative position in the queue and the weighted average value is greater than or equal to a preset threshold, and the latest first horizontal relative position in the queue is less than the weighted average value, the human body movement state is determined to be moving to the first side.

For example, the queue has a preset length of 16 and is initially empty. Assuming there are 16 consecutive frames with the first horizontal relative position, these 16 frames are sequentially stored in the queue as: [p1, p2, p3,..., p16]. The first horizontal relative position in this queue can be considered as the human body's movement path, representing the change in the human body's position over the past 16 frames.

Calculate a weighted average for the first horizontal relative position in the queue. Assume the latest frame is at the end of the queue and the earliest frame is at the beginning. A weight array can be defined, for example, with linearly increasing weights [1, 2, 3,..., 16].

Then, the weighted average value wmean is calculated as (1*p1+2*p2+3*p3+··· +16*p16)/(1+2+3+···+16). It's understandable that the weighted average value considers the position information of the most recent 16 frames, with the newest frame having the highest weight.

The preset threshold is t. If |p16-wmean| < t, then the human body movement state is determined to be stationary.

If |p16-wmean|≥t and p16>wmean, then the human body movement state is determined to be moving to the second side.

If |p16-wmean|≥t and p16<wmean, then the human body movement state is determined to be moving towards the first side.

In this embodiment, by utilizing a queue to store and weighted average multiple first horizontal relative positions, the movement trend of the human body can be smoothly tracked. This method reduces the impact of fluctuations in single-frame data and improves the stability of the judgment of the human body movement state. The time-series recording of the queue helps to more accurately determine whether the human body is stationary, moving left or right, thereby precisely adjusting the light curtain pattern and providing a more consistent and natural interactive effect.

Furthermore, the present application also proposes a light curtain control apparatus, which includes: an acquisition module, a first determination module, a second determination module, and a display module.

The acquisition module is configured to acquire an environmental image of a vehicle.

The first determination module is configured to, in response to that a human body image region exists in the environmental image, determine a first horizontal relative position of the human body image region in the environmental image.

The second determination module is configured to determine a second horizontal relative position on a light curtain of the vehicle according to the first horizontal relative position.

The display module is configured to display a light curtain pattern based on the second horizontal relative position.

The principle and implementation process of the light curtain control in this embodiment are explained in the above embodiments and will not be repeated here.

Furthermore, the present application also proposes a vehicle, which includes a memory, a processor, and a light curtain control program stored in the memory and executable on the processor. When the light curtain control program is executed by the processor, it implements the steps of the light curtain control method described above.

Since this light curtain control program employs all the technical solutions of all the aforementioned embodiments when executed by the processor, it possesses at least all the beneficial effects brought about by all the technical solutions of all the aforementioned embodiments, which will not be elaborated upon here.

Furthermore, embodiments of the present application also propose a computer-readable storage medium storing a light curtain control program, which, when executed by a processor, implements the steps of the light curtain control method described above.

Since this light curtain control program employs all the technical solutions of all the aforementioned embodiments when executed by the processor, it has at least all the beneficial effects brought about by all the technical solutions of all the aforementioned embodiments, which will not be elaborated here.

It should be noted that, in this document, the terms "comprise", "include", or any other variations thereof are intended to cover non-exclusive inclusion, such that a process, method, article, or system that includes a list of elements includes not only those elements but also other elements not expressly listed, or elements inherent to such a process, method, article, or system. Unless otherwise specified, an element defined by the phrase "comprise one..." does not exclude the presence of other identical elements in the process, method, article, or system that includes that element.

The sequence numbers of the embodiments in this application are for descriptive purposes only and do not represent the superiority or inferiority of the embodiments.

Through the above description of the embodiments, those skilled in the art can clearly understand that the methods of the above embodiments can be implemented by means of software plus necessary general-purpose hardware platforms. Of course, they can also be implemented by hardware, but in many cases the former is a better implementation method. Based on this understanding, the technical solution of the present application, in essence, or the part that contributes to the related art, can be embodied in the form of a software product. This computer software product is stored in a storage medium (such as read-only memory (ROM)/random-access memory (RAM), magnetic disk, optical disk) as described above, and includes at least two instructions to cause a vehicle to execute the methods of each embodiment of the present application.

The above are merely embodiments of the present application and do not limit the patent scope of the present application. Any equivalent structural or procedural transformations made using the content of the present application's specification and drawings, or direct or indirect applications in other related technical fields, are similarly included within the patent protection scope of the present application.

## Claims

1. A light curtain control method, **characterized by** comprising:
acquiring an environmental image of a vehicle;
in response to that a human body image region exists in the environmental image, determining a first horizontal relative position of the human body image region in the environmental image;
determining a second horizontal relative position on a light curtain of the vehicle according to the first horizontal relative position; and
displaying a light curtain pattern based on the second horizontal relative position.

2. The light curtain control method according to claim 1, wherein after the acquiring the environmental image of the vehicle and before the determining the first horizontal relative position of the human body image region in the environmental image, the method further comprises:
converting the environmental image in a color-encoded YUV format into the environmental image in a graphics processing unit (GPU) texture format; and
inputting the environmental image in the GPU texture format into a pre-trained human body recognition model, to obtain a human body recognition result output by the human body recognition model, wherein the human body recognition result comprises human body image region position data; and
the determining the first horizontal relative position of the human body image region in the environmental image comprises:
calculating the first horizontal relative position according to the human body image region position data and a pixel width of the environmental image in the GPU texture format.

3. The light curtain control method according to claim 2, wherein the human body image region position data comprises a center pixel horizontal coordinate of the human body image region, and the calculating the first horizontal relative position according to the human body image region position data and the pixel width of the environmental image in the GPU texture format comprises:
dividing the center pixel horizontal coordinate of the human body image region by the pixel width of the environmental image in the GPU texture format to obtain the first horizontal relative position.

4. The light curtain control method according to claim 1, wherein the displaying the light curtain pattern based on the second horizontal relative position comprises:
acquiring the light curtain pattern, wherein a pixel width of the light curtain pattern is less than a pixel width of the light curtain, and a pixel height of the light curtain pattern is equal to a pixel height of the light curtain;
performing pixel supplementation outside the light curtain pattern based on the second horizontal relative position to obtain a target pattern, wherein the light curtain pattern is located at the second horizontal relative position in the target pattern, and a pixel width of the target pattern is consistent with the pixel width of the light curtain and a pixel height of the target pattern is consistent with the pixel height of the light curtain; and
controlling the light curtain to display the target pattern.

5. The light curtain control method according to claim 4, wherein the human body recognition result further comprises human body posture data, and the acquiring the light curtain pattern comprises:
acquiring a corresponding light curtain pattern reflecting a human body posture according to the human body posture data.

6. The light curtain control method according to claim 4, wherein the acquiring the light curtain pattern comprises:
acquiring a corresponding light curtain pattern reflecting a human body movement state according to the human body movement state, wherein the human body movement state is pre-determined based on the first horizontal relative position.

7. The light curtain control method according to claim 4, wherein the human body recognition result further comprises human body posture data, and the acquiring the light curtain pattern comprises:
acquiring a corresponding light curtain pattern reflecting both a human body posture and a human body movement state according to the human body posture data and the human body movement state, wherein the human body movement state is pre-determined based on the first horizontal relative position.

8. The light curtain control method according to claim 6 or 7, wherein the number of the environmental images in the GPU texture format is at least two frames, each frame of the environmental image in the GPU texture format corresponds to one first horizontal relative position, pixel horizontal coordinates of the environmental image in the GPU texture format increase from a first side to a second side, and pre-determining the human body movement state based on the first horizontal relative position comprises:
storing at least two first horizontal relative positions into a preset-length queue;
performing a weighted average calculation on the at least two first horizontal relative positions in the queue to obtain a weighted average value, wherein weights corresponding to the at least two first horizontal relative positions in the queue are sequentially set according to a time order of being stored into the queue, and a weight of a latest stored first horizontal relative position in the queue is highest;
in response to that an absolute difference between the latest stored first horizontal relative position in the queue and the weighted average value is less than a preset threshold, determining that the human body movement state is stationary;
in response to that the absolute difference between the latest stored first horizontal relative position in the queue and the weighted average value is greater than or equal to the preset threshold, and the latest stored first horizontal relative position in the queue is greater than the weighted average value, determining that the human body movement state is moving toward the second side; or
in response to that the absolute difference between the latest stored first horizontal relative position in the queue and the weighted average value is greater than or equal to the preset threshold, and the latest stored first horizontal relative position in the queue is less than the weighted average value, determining that the human body movement state is moving toward the first side.

9. A light curtain control apparatus, **characterized by** comprising:
an acquisition module, configured to acquire an environmental image of a vehicle;
a first determination module, configured to, in response to that a human body image region exists in the environmental image, determine a first horizontal relative position of the human body image region in the environmental image;
a second determination module, configured to determine a second horizontal relative position on a light curtain of the vehicle according to the first horizontal relative position; and
a display module, configured to display a light curtain pattern based on the second horizontal relative position.

10. A vehicle, **characterized by** comprising:
a memory;
a processor; and
a light curtain control program stored on the memory and executable on the processor, wherein the light curtain control program, when executed by the processor, performs steps of:
acquiring an environmental image of the vehicle;
in response to that a human body image region exists in the environmental image, determining a first horizontal relative position of the human body image region in the environmental image;
determining a second horizontal relative position on a light curtain of the vehicle according to the first horizontal relative position; and
displaying a light curtain pattern based on the second horizontal relative position.

11. The vehicle according to claim 10, wherein the light curtain control program in the memory, when executed by the processor, further performs steps of:
converting the environmental image in a color-encoded YUV format into the environmental image in a graphics processing unit (GPU) texture format; and
inputting the environmental image in the GPU texture format into a pre-trained human body recognition model, to obtain a human body recognition result output by the human body recognition model, wherein the human body recognition result comprises human body image region position data.

12. The vehicle according to claim 11, wherein the light curtain control program in the memory, when executed by the processor, further performs steps of:
calculating the first horizontal relative position according to the human body image region position data and a pixel width of the environmental image in the GPU texture format.

13. The vehicle according to claim 11, wherein the light curtain control program in the memory, when executed by the processor, further performs steps of:
dividing the center pixel horizontal coordinate of the human body image region by the pixel width of the environmental image in the GPU texture format to obtain the first horizontal relative position.

14. The vehicle according to claim 10, wherein the light curtain control program in the memory, when executed by the processor, further performs steps of:
acquiring the light curtain pattern, wherein a pixel width of the light curtain pattern is less than a pixel width of the light curtain, and a pixel height of the light curtain pattern is equal to a pixel height of the light curtain;
performing pixel supplementation outside the light curtain pattern based on the second horizontal relative position to obtain a target pattern, wherein the light curtain pattern is located at the second horizontal relative position in the target pattern, and a pixel width of the target pattern is consistent with the pixel width of the light curtain and a pixel height of the target pattern is consistent with the pixel height of the light curtain; and
controlling the light curtain to display the target pattern.

15. The vehicle according to claim 14, wherein the light curtain control program in the memory, when executed by the processor, further performs steps of:
acquiring a corresponding light curtain pattern reflecting a human body posture according to human body posture data.

16. The vehicle according to claim 14, wherein the light curtain control program in the memory, when executed by the processor, further performs steps of:
acquiring a corresponding light curtain pattern reflecting a human body movement state according to the human body movement state, wherein the human body movement state is pre-determined based on the first horizontal relative position.

17. The vehicle according to claim 14, wherein the light curtain control program in the memory, when executed by the processor, further performs steps of:
acquiring a corresponding light curtain pattern reflecting both a human body posture and a human body movement state according to human body posture data and the human body movement state, wherein the human body movement state is pre-determined based on the first horizontal relative position.

18. The vehicle according to claim 16 or 17, wherein the light curtain control program in the memory, when executed by the processor, further performs steps of:
storing at least two first horizontal relative positions into a preset-length queue;
performing a weighted average calculation on the at least two first horizontal relative positions in the queue to obtain a weighted average value, wherein weights corresponding to the at least two first horizontal relative positions in the queue are sequentially set according to a time order of being stored into the queue, and a weight of a latest stored first horizontal relative position in the queue is highest;
in response to that an absolute difference between the latest stored first horizontal relative position in the queue and the weighted average value is less than a preset threshold, determining that the human body movement state is stationary;
in response to that the absolute difference between the latest stored first horizontal relative position in the queue and the weighted average value is greater than or equal to the preset threshold, and the latest stored first horizontal relative position in the queue is greater than the weighted average value, determining that the human body movement state is moving toward the second side; or
in response to that the absolute difference between the latest stored first horizontal relative position in the queue and the weighted average value is greater than or equal to the preset threshold, and the latest stored first horizontal relative position in the queue is less than the weighted average value, determining that the human body movement state is moving toward the first side.

19. A computer-readable storage medium, **characterized in that** a light curtain control program is stored on the computer-readable storage medium, and the light curtain control program, when executed by a processor, performs the light curtain control method according to any one of claims 1 to 8.
